# EUROPEAN PATENT SPECIFICATION

(11) **EP 0 711 321 B1**
(45) Date of publication and mention of the grant of the patent: **21.10.1998**
(21) Application number: 94922309.3
(22) Date of filing: 01.08.1994
(51) Int. Cl.: C08J 5/18, B29D 7/01, A22C 13/00

(54) **COLLAGEN FILM**
KOLLAGENFOLIE
FILM DE COLLAGENE

(30) Priority: 31.07.1993 GB 9315937
(43) Date of publication of application: 15.05.1996
(73) Proprietor: Devro Plc, Glasgow G69 0JE (GB)
(72) Inventor: MARTIN, Robin, Collet, Stirling FK7 9LU (GB); FITZPATRICK, Hugh, Cameron, Ross, Glasgow G72 8TX (GB)
(74) Representative: Shanks, Andrew
(86) International application number: GB9401657
(87) International publication number: WO9504102

(56) References cited:
- EP-A- 0 070 940
- CH-A- 662 543
- FR-A- 2 074 070
- US-A- 4 657 548
- US-A- 4 910 034
- DATABASE WPI Week 8651, Derwent Publications Ltd., London, GB; AN 86-334861 & JP,A,61 249 366 (MATSUBE) 6 November 1986
- Book no. , 1985, 'ENCYCLOPEDIA OF POLYMER SCIENCE AND ENGINEERING, VOL. 3, 723', JOHN WILEY & SONS, NEW YORK

## Description

### FIELD OF THE INVENTION

The present invention relates to collagen film for wrapping meat and poultry food products, and to a method of wrapping such products.

### BACKGROUND OF THE INVENTION

It is known in the food industry to package meat and poultry joints, particularly ham, in a compact form in a net prior to cooking. The net serves to hold together the pieces of meat or poultry and provides a solid carveable netted product of good appearance. It is also conventional to interpose a layer of collagen film, between the meat or poultry joints and the outer elastic net whose purpose is to prevent damage to the meat surface, to reduce loss of juices during cooking, and to improve the external appearance of the netted product. Such collagen films are widely available, for example from Devro Ltd. Normally, the collagen film is provided in a continuous length of widths typically 400mm, 480mm and 580mm and typically has a thickness in the range 0.015 to 0.035mm. As typified in US Patents Nos. 4,910,034 and 4,958,477, the disclosures of which are incorporated herein by reference, pieces of meat are compressed within a cylindrical guide, around which is fed the flat film, which is overlapped into a tubular configuration. An elastic netting is provided around the outside of the collagen film tube. As the compacted meat or poultry pieces are delivered from the guide tube, they are wrapped in the collagen tube and the net pulled over the collagen layer. The netting is then crimped at either end of the meat so as to form a generally ovoid netted product. The product is then cooked. The process is particularly applicable for the production of netted cooked hams. Collagen film is a material of not particularly high tear strength, particularly when wet or in contact with moist meat or poultry. Because of its proteinacious nature, cooking has the effect of bonding the collagen film to the meat or poultry to form a unified product.

One problem which is encountered in the process described above, is that air or steam may become trapped under the collagen film, either during wrapping as described above or during subsequent cooking. This gives rise to unsightly air pockets which detract from the appearance of the product. To counteract this the filled netted product may be punctured manually, or "tacked" by rolling the netted product over a spike or tack board. However, since the meat or poultry is compressed, puncturing the film in this way risks splitting the collagen film, which is not intrinsically particularly strong. This risk is heightened by the practice of plumping the filled netted product to improve its shape prior to cooking. During plumping, the product is compressed longitudinally to make the ovoid shape round; which increases the hoop stress on the collagen film.

It is an object of the present invention to mitigate these problems.

### SUMMARY OF THE INVENTION

One aspect of the present invention provides a food wrapping in the form of a perforated flat collagen film for overlapping into a tubular configuration for wrapping meat and poultry food products, the film comprising a series of perforations sufficiently large to allow the escape of trapped air or steam from within the wrapped product, the pattern and the spacing of the perforations in each of two mutually perpendicular directions and the size of each perforation being such that the film has a strength sufficient for wrapping, processing and cooking the compressed netted food product.

According to another aspect of the present invention there is provided a method of wrapping a meat or poultry product, the method comprising the steps:
providing a perforated collagen film, the degree of perforation of the film being selected to allow passage of air therethrough, but not so as to compromise the strength of the film; and
wrapping the film around a meat or poultry product, any air trapped between said film and said product escaping through the film perforations.

Preferably, the film-wrapped product is subsequently wrapped in an elastic net.

According to a further aspect of the present invention there is provided a method of producing collagen film for use in wrapping meat and poultry products, the method comprising the steps:
providing a collagen gel;
extruding a film from the gel onto a surface;
drying the extruded film; and
perforating the dried film such that, in use, the film will allow escape of air from between the film and a meat or poultry product wrapped therein, and the strength of the film is maintained at a level sufficient to allow wrapping, processing and cooling of the food product without tearing.

The gel from which the film is extruded is typically acidic, to provide swelling of the gel. The film may be utilised in the acidic condition or may be neutralised, for example by passing ammonia over the dried film. The perforation step will typically be carried out following the neutralising step.

Another aspect of the invention relates to the cooked or uncooked filled netted product having a perforated collagen film wrapping.

It has been found that the perforations may be produced conveniently using needles. The needles may be mounted radially in a drum provided with a cam arrangement to extend the needles as the drum is rotated at the same speed as the dried film to be perforated. Surprisingly, it has been found that round needles having square-cut ends produce holes with clean edges; ragged edges are undesirable as the possibility of tear propagation from the hole edges would be likely to significantly reduce the film strength. Perforation may be carried out using a punch and die arrangement, but alignment of the punch and die during production may give rise to production difficulties. It has been found that using a laser beam to produce a perforation gives particularly good results, since the periphery of the hole is smooth and moreover may be reinforced by some melting of the collagen material. Sparking may provide similar advantages. The perforations are preferably circular or generally oval in shape.

It has been found that larger perforations tend to reduce the strength of the collagen film to an unacceptable level. As well as reducing the strength, larger holes tend to release too much liquid during cooking and thereby lead to unacceptable weight loss in the cooked product. Preferably, the perforations have a diameter (or minor axis in the case of oval perforations) less than 0.9mm, preferably less than 0.7mm, most preferably 0.5mm or less. In order to provide efficient release of trapped air, a practical lower size limit is 0.1mm, preferably at least 0.2mm.

Generally speaking, the perforations should be arranged in a pattern which maximises the distance between adjacent perforations. The perforations may be arranged in a random pattern (provided that a lower limit for the spacing between adjacent perforations is observed), or a square pattern. Preferably, a diamond pattern is employed in which the holes in adjacent rows are staggered with respect to each other. The spacing between adjacent holes may be the same or different in the longitudinal or transverse directions. Preferably, each perforation is spaced 20 to 100mm from its closest neighbour. In a preferred embodiment, the holes are spaced 30 to 90mm apart in the longitudinal direction and 16 to 60mm apart in the transverse direction. Preferably also, the holes are spaced from the edge of the film, to minimise the possibility of tear propagation from the holes.

The film thickness is preferably between 0.017 and 0.028mm (0.70 - 1.10 thou). The most preferred hole pattern for each particular application will depend on the characteristics of the film and the stress the film will experience during the wrapping operation, for example: certain film extrusion processes produce film having greater strength in the longitudinal machine direction than in the transverse direction; and during the wrapping operation the hoop stresses experienced by the film may be greater than the longitudinal stresses (using the apparatus described in US Patent No. 4,958,477 the maximum stress would likely be experienced transversely of the film).

Usually, the perforations are arranged such that the strength of the collagen film is reduced by not more than 30%, preferably 20%, more preferably 10% and ideally 5% of its strength in a specified direction.

Embodiments of the present invention will now be described by way of example only.

### BRIEF DESCRIPTION OF THE DRAWING

The Figure shows schematically a collagen film according to the invention having perforations arranged in a diamond pattern. For the purpose of illustration, the film is of a reduced width compared to conventional widths.

### DETAILED DESCRIPTION OF PREFERRED EMBODIMENTS

### EXAMPLE 1 (punched holes)

An acid collagen film (type 60/61 available from Devro Ltd., Bellshill, UK and having a thickness of about 0.022mm) was perforated with 0.5 and 1.0mm holes by punching using a punch and die. Dumb-bell shaped pieces of film (total length 71m, width 12mm, with circular end portions of 19mm diameter each) were cut from the film in both the machine direction (MD) and transverse direction (TD) relative to the direction of extrusion and production in a conventional film forming machine. Holes were then punched in the centre of the dumb-bell in the case ofa single perforation; and in the case of two perforations these were spaced 25-30mm apart symmetrically along the central rectangular portion.

The enlarged end portions of the dumb-bell shaped pieces were clamped in the jaws of an Instron 1112 machine. Water was then sprayed onto the pieces to simulate the conditions the film experiences in use. The jaws were then moved apart at 50 mm/min and readings taken to establish the modulus (kg/mm) of the samples, a higher modulus signifying a stiffer sample and a lower modulus signifying a more elastic sample.

The results are shown in Table 1.

The results indicated that the sample with the 0.5mm hole retained acceptable properties, however the decrease in modulus (27%) the transverse direction of the sample with the 1mm hole is approaching an unacceptable level.

### EXAMPLE 2 (laser cut holes)

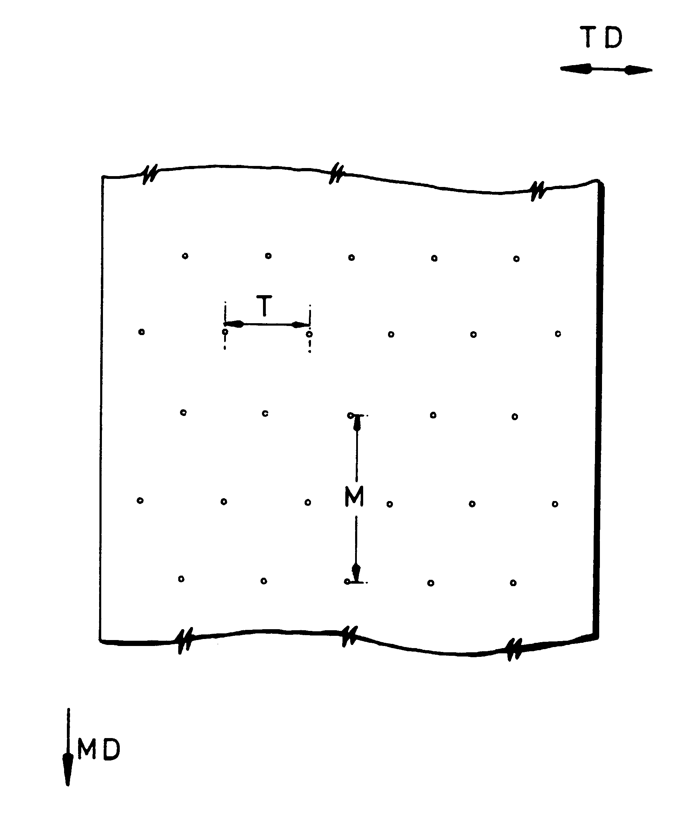

A neutralised acid collagen film (Devro Ltd.) was perforated with 0.5mm diameter holes in a diamond pattern (see Figure 1). The spacing M between holes in the machine direction (MD) was 60mm and the spacing T in the transverse direction (TD) was 30mm. The holes were perforated using a laser beam.

The MD and TD strengths were measured by cutting out dumb-bell shaped pieces of film, as in Example 1, which included one or two holes and testing the pieces in a Instron 1112 machine. The results are given in Table 2.

**TABLE 1**

| Film | Modulus | Percentage | |
|---|---|---|---|
| | | MD | TD |
| A) Unperforated (comparison) | MD 1.46 (± 0.14) | 100 | |
| | TD 1.00 (± 0.16) | | 100 |
| | | | |
| One 1mm hole | MD 1.37 (± 0.17) | 94 | |
| | TD 0.73 (± 0.13) | | 73 |
| | | | |
| One 0.5mm hole | MD 1.43 (± 0.20) | 98 | |
| | TD 0.89 (± 0.20) | | 89 |
| B) Unperforated (comparison) | MD 1.90 (± 0.27) | 100 | |
| | TD 0.70 (± 0.15) | | 100 |
| | | | |
| Two 1mm holes | MD 1.63 (± 0.19) | 86 | |
| | TD 0.58 (± 0.10) | | 83 |
| | | | |
| Two 0.5mm holes | MD 1.81 (± 0.19) | 95 | |
| | TD 0.64 (± 0.07) | | 91 |

**TABLE 2**

| Film | Modulus |
|---|---|
| MD | |
| Unperforated | 0.4552 |
| | 0.3565 |
| | 0.4195 |
| | |
| One 0.5mm hole | 0.4282 |
| | 0.3394 |
| | 0.3847 |
| | |

| TD | |
|---|---|
| Unperforated | 0.1228 |
| | |
| One 0.5mm hole | 0.0935 |
| | 0.1127 |
| | 0.0713 |
| | |
| Two 0.5mm holes | 0.1167 |
| | 0.0686 |

## Claims

1. A food wrapping in the form of a perforated flat collagen film for overlapping into a tubular configuration for wrapping meat and poultry food products, the film comprising a series of perforations sufficiently large to allow the escape of trapped air or steam from within the wrapped product, the pattern and the spacing of the perforations in each of two mutually perpendicular directions and the size of each perforation being such that the film has a strength sufficient for wrapping, processing and cooking the food product.

2. The film of claim 1 in which the perforations have diameters of less than 0.9 mm.

3. The film of claim 2 in which the perforations have diameters of less than 0.7 mm.

4. The film of claim 3 in which the perforations have diameters of less than 0.5 mm.

5. The film of any preceding claim in which the perforations have diameters of at least 0.1 mm.

6. The film of claim 5 in which the perforations have diameters of at least 0.2 mm.

7. The film of any preceding claim wherein the perforations are arranged in a diamond pattern.

8. The film of any preceding claim in which each perforation is spaced 20 to 100 mm from its closest neighbour.

9. The film of any preceding claim wherein the film thickness is between 0.017 and 0.028 mm.

10. The film of any preceding claim in which the perforations are arranged such that the strength of the collagen film is reduced by not more than 30% in a specified direction.

11. The film of claim 10 in which the perforations are arranged such that the strength of the collagen film is reduced by not more than 20% in a specified direction.

12. The film of claim 11 in which the perforations are arranged such that the strength of the collagen film is reduced by not more than 10% in a specified direction.

13. The film of claim 12 in which the perforations are arranged such that the strength of the collagen film is reduced by not more than 5% in a specified direction.

14. A method of producing a food wrapping film for use in wrapping meat and poultry products, the method comprising the steps:
providing a collagen gel;
extruding a film from the gel onto a surface;
drying the extruded film; and
perforating the dried film such that, in use, the film will allow escape of air from between the film and a meat or poultry product wrapped therein, and the strength of the film is maintained at a level sufficient to allow wrapping, processing and cooking of the food product without tearing.

15. The method of claim 14 in which the perforations are produced by needles.

16. The method of claim 14 in which the perforations are produced by a laser.

17. A method of wrapping meat or poultry product, the method comprising the steps:
providing a perforated flat collagen film, the degree of perforation of the film being selected to allow the passage of air therethrough, but not so as to compromises the strength of the film;
overlapping the film into a tubular configuration and wrapping the film around a meat or poultry product, any air trapped between said film and said product escaping through the film perforations; and
providing an elastic net around the outside of the collagen tube.

18. A cooked or uncooked filled netted product provided with a perforated collagen film wrapping as claimed in any of claims 1 to 13.

## Patentansprüche

1. Lebensmittelverpackung in Form einer perforierten flachen Collagenfolie zum Überlappen in eine röhrenförmige Konfiguration zur Verpackung von Fleisch- und Geflügellebensmittelprodukten, wobei die Folie eine Reihe von Perforationen aufweist, welche groß genug sind, um das Entweichen eingeschlossener Luft oder eingeschlossenen Dampfes vom Inneren des verpackten Produkts zu ermöglichen, wobei das Muster und die Beabstandung der Perforationen in jeder der zueinander senkrechten Richtungen und die Größe jeder Perforation derart ausgelegt sind, daß die Folie eine Festigkeit aufweist, welche zur Verpackung, Verarbeitung und zum Kochen des Nahrungmittelprodukts ausreicht.

2. Folie gemäß Anspruch 1, bei der die Perforationen Durchmesser von weniger als 0,9 mm aufweisen.

3. Folie gemäß Anspruch 2, bei der die Perforationen Durchmesser von weniger als 0,7 mm aufweisen.

4. Folie gemäß Anspruch 3, bei der die Perforationen Durchmesser von weniger als 0,5 mm aufweisen.

5. Folie gemäß einem der vorhergehenden Ansprüche, bei der die Perforationen Durchmesser von mindestens 0,1 mm aufweisen.

6. Folie gemäß Anspruch 5, bei der die Perforationen Durchmesser von mindestens 0,2 mm aufweisen.

7. Folie gemäß einem der vorhergehenden Ansprüche, bei der die Perforationen in einem Diamantmuster angeordnet sind.

8. Folie gemäß einem der vorhergehenden Ansprüche, bei der jede Perforation 20 bis 100 mm von derem nächsten Nachbarn beabstandet ist.

9. Folie gemäß einem der vorhergehenden Ansprüche, bei der die Foliendicke zwischen 0,017 und 0,028 mm liegt.

10. Folie gemäß einem der vorhergehenden Ansprüche, bei der die Perforationen so angeordnet sind, daß die Festigkeit der Collagenfolie um nicht mehr als 30 % in einer festgesetzten Richtung reduziert ist.

11. Folie gemäß Anspruch 10, bei der die Perforationen so angeordnet sind, daß die Festigkeit der Collagenfolie um nicht mehr als 20 % in einer festgesetzten Richtung reduziert ist.

12. Folie gemäß Anspruch 11, bei der die Perforationen so angeordnet sind, daß die Festigkeit der Collagenfolie um nicht mehr als 10 % in einer festgesetzten Richtung reduziert ist.

13. Folie gemäß Anspruch 12, bei der die Perforationen so angeordnet sind, daß die Festigkeit der Collagenfolie um nicht mehr als 5 % in einer festgesetzten Richtung reduziert ist.

14. Verfahren zur Herstellung einer Folie zur Lebensmittelverpackung zur Verwendung bei der Verpackung von Fleisch- und Geflügelprodukten, wobei das Verfahren folgende Schritte umfaßt:
Bereitstellung eines Collagengels;
Extrudieren einer Folie von dem Gel auf eine Oberfläche;
Trocknen der extrudierten Folie; und
Perforieren der getrockeneten Folie in einer Weise, daß bei der Verwendung die Folie ein Entweichen von Luft von einer Stelle zwischen der Folie und einem darin verpackten Fleisch- oder Geflügelprodukt ermöglicht und die Pestigkeit der Folie auf einem Grad gehalten wird, welcher ausreicht, eine Verpackung, Verarbeitung und ein Kochen des Lebensmittelprodukts ohne Reißen zu ermöglichen.

15. Verfahren gemäß Anspruch 14, bei dem die Perforationen durch Nadeln entstehen.

16. Verfahren gemäß Anspruch 14, bei dem die Perforationen durch einen Laser entstehen.

17. Verfahren zur Verpackung von Fleisch- oder Geflügelprodukten, wobei das Verfahren folgende Schritte umfaßt:
Bereitstellung einer perforierten flachen Collagenfolie, wobei der Perforationsgrad der Folie ausgewählt ist, um den Durchtritt von Luft hierdurch zu ermöglichen, jedoch die Festigkeit der Folie nicht zu gefährden;
Überlappen der Folie in eine röhrenförmige Konfiguration und Wickeln der Folie um ein Fleisch- oder Geflügelprodukt, wobei jegliche Luft, welche zwischen der Folie und dem Produkt eingeschlossen ist, durch die Folienperforationen entweicht; und
Bereitstellung eines elastischen Netzes um die Außenseite der Collagenröhre.

18. Gekochtes oder ungekochtes gefülltes, mit einem Netz versehenes Produkt mit einer perforierten Collagenfolienverpackung gemäß einem der Ansprüche 1 bis 13.

## Revendications

1. Enveloppe pour aliments sous la forme d'un film plat perforé de collagène pour recouvrir selon une configuration tubulaire et envelopper des produits alimentaires à base de viande et de volaille, le film comprenant une série de perforations suffisamment larges pour permettre à la vapeur ou à l'air piégé de s'échapper du produit enveloppé, le motif et l'espacement des perforations dans chacune des deux directions mutuellement perpendiculaires et la dimension de chaque perforation étant tels que le film présente une solidité suffisante pour l'enveloppement, le traitement et la cuisson du produit alimentaire.

2. Film suivant la revendication 1, dans lequel les perforations ont un diamètre inférieur à 0,9 mm.

3. Film suivant la revendication 2, dans lequel les perforations ont un diamètre inférieur à 0,7 mm.

4. Film suivant la revendication 3, dans lequel les perforations ont un diamètre inférieur à 0,5 mm.

5. Film suivant l'une quelconque des revendications précédentes, dans lequel les perforations ont un diamètre d'au moins 0,1 mm.

6. Film suivant la revendication 5, dans lequel les perforations ont un diamètre d'au moins 0,2 mm.

7. Film suivant l'une quelconque des revendications précédentes, dans lequel les perforations sont disposées selon un motif en losange.

8. Film suivant l'une quelconque des revendications précédentes, dans lequel chaque perforation est espacée de 20 à 100 mm de la perforation la plus proche.

9. Film suivant l'une quelconque des revendications précédentes, dans lequel l'épaisseur du film est comprise entre 0,017 et 0,028 mm.

10. Film suivant l'une quelconque des revendications précédentes, dans lequel les perforations sont disposées de telle sorte que la solidité du film de collagène n'est pas réduite de plus de 30% dans une direction spécifiée.

11. Film suivant la revendication 10, dans lequel les perforations sont disposées de telle sorte que la solidité du film de collagène n'est pas réduite de plus de 20% dans une direction spécifiée.

12. Film suivant la revendication 11, dans lequel les perforations sont disposées de telle sorte que la solidité du film de collagène n'est pas réduite de plus de 10% dans une direction spécifiée.

13. Film suivant la revendication 12, dans lequel les perforations sont disposées de telle sorte que la solidité du film de collagène n'est pas réduite de plus de 5% dans une direction spécifiée.

14. Procédé pour produire un film pour enveloppe pour aliments utile pour envelopper des produits à base de viande et de volaille, le procédé comprenant les étapes de :
fourniture d'un gel de collagène;
extrusion d'un film à partir du gel sur une surface;
séchage du film extrudé; et
perforation du film séché de telle sorte qu'en cours d'utilisation, le film va permettre l'échappement de l'air situé entre le film et un produit à base de viande ou de volaille enveloppé dans celui-ci, et que la solidité du film est maintenue à un niveau suffisant pour permettre l'enveloppement, le traitement et la cuisson du produit alimentaire sans déchirure.

15. Procédé suivant la revendication 14, dans lequel les perforations sont produites par des aiguilles.

16. Procédé suivant la revendication 14, dans lequel les perforations sont produites par un laser.

17. Procédé pour envelopper un produit à base de viande ou de volaille, le procédé comprenant les étapes de :
fourniture d'un film plat perforé de collagène, dont le degré de perforation est choisi de façon à laisser passer l'air, mais à ne pas compromettre la solidité du film;
recouvrement du film selon une configuration tubulaire et enveloppement du film autour d'un produit à base de viande ou de volaille, l'air éventuellement piégé entre ce film et ce produit s'échappant à travers les perforations du film; et
fourniture d'un filet élastique autour de l'extérieur du tube de collagène.

18. Produit garni, cuit ou non cuit, recouvert d'un filet pourvu d'une enveloppe de film de collagène perforé suivant l'une quelconque des revendications 1 à 13.
